Europäisches Patentamt

European Patent Office

Office européen des brevets

(11) Publication number: **0 584 859 A1**

# EUROPEAN PATENT APPLICATION

(21) Application number: 93202336.9

(22) Date of filing: **09.08.93**

(51) Int. Cl.5: **H01J 9/02, B23K 26/00,**
**H01J 61/067, H01J 61/70**

(30) Priority: **10.08.92 US 927586**

(43) Date of publication of application:
**02.03.94 Bulletin 94/09**

(84) Designated Contracting States:
**BE DE ES FR GB IT NL**

(71) Applicant: **PHILIPS ELECTRONICS N.V.**
**Groenewoudseweg 1**
**NL-5621 BA Eindhoven(NL)**

(72) Inventor: **Woodward, David, c/o INT.**
**OCTROOIBUREAU B.V.**
**Prof. Holstlaan 6**
**NL-5656 AA Eindhoven(NL)**

Inventor: **Goldburt, Efim, c/o INT.**
**OCTROOIBUREAU B.V.**
**Prof. Holstlaan 6**
**NL-5656 AA Eindhoven(NL)**
Inventor: **Patt, Paul, c/o INT. OCTROOIBUREAU**
**B.V.**
**Prof. Holstlaan 6**
**NL-5656 AA Eindhoven(NL)**

(74) Representative: **Evers, Johannes Hubertus**
**Maria et al**
**INTERNATIONAAL OCTROOIBUREAU B.V**
**Prof. Holstlaan 6**
**NL-5656 AA Eindhoven (NL)**

(54) **Discharge lamps with composite electrodes and method of installation of these electrodes in the lamps.**

(57) A method of electrically connecting and securing a composite discharge electrode (5) in an electric gas discharge lamp (1). A composite discharge electrode (5) is held against a metallic lead-through conductor (4). A beam of laser light (21) is directed onto a region (46) of the lead-through (4) immediately adjacent the electrode (5) to form a pool of molten metal which wets the composite electrode (5). The beam of laser light (21) is then removed such that the pool (4c) of molten metal solidifies and coalesces with the lead-through and the electrode (5). The resultant weld provides a good electrical, as well as a physical, connection and permits the use of prefabricated composite sintered discharge electrodes (5) without integral leads along with conventional lead-through wires of the type conventionally used in gas discharge lamps.

FIG. 2

EP 0 584 859 A1

The invention relates to a method of manufacturing electric gas discharge lamps having composite discharge electrodes, and more particularly, to a method for electrically connecting and securing a composite discharge electrode in a gas discharge lamp. The invention also relates to lamps having hot or cold cathode composite discharge electrodes manufactured according to this method.

There are two types of cathodes predominantly used in the fluorescent lamp arts. They are both heated to their "thermionic emission temperature", the temperature at which they emit electrons, during lamp operation to provide a source of electrons to support the discharge arc. One of said cathode types is termed a "hot cathode" and is heated to its emission temperature by a heated filament and the arc discharge whereas the other type of cathode is a "cold cathode" and is heated to its emission temperature solely by the arc discharge.

The hot cathode type electrodes most commercially prevalent in the art consist of a tungsten filament coated with a suitable emitter material, for example a mixture of the oxides of barium, strontium and calcium, which readily releases electrons when heated to a temperature of about 800°C.

Hot cathode electrodes are used in both "pre-heat" and "rapid-start" lamps. In preheat lamps, the electrodes are heated to their emission temperature prior to ignition of the lamp by a pre-heat current. The ample supply of electrons emitted from the hot cathodes enable the lamp to ignite at voltages of about 100 - 300V. The heater current is switched off after a discharge arc is ignited between the electrodes and the high temperature necessary for free emission of electrons is maintained after ignition by ionic bombardment from the discharge. In rapid start lamps, the heater current is not turned off and continues to flow through the filament electrodes after the lamp is burning.

Cold-cathode electrodes are used in "instant-start" lamps and do not employ a heater current to generate electrons to aid in lamp starting. Instant-start lamps rely solely on a high voltage of about 400 to 1000 volts between the two electrodes to initiate a glow discharge. The glow discharge provides further heating of the electrodes causing an almost instantaneous transition to an arc discharge.

The cold cathodes predominantly used in "instant start" lamps employ a transversely mounted helically wound tungsten filament coated with emissive material, as with hot cathode electrodes, but are of much sturdier construction and contain significantly more emitter material. Instead of a tungsten filament, other cold cathodes known in the art employ a metallic can or holder in which a substantial quantity of emitter material is deposited, as known for example from U.S. Patents 2,677,623 (Claude et al); 3,325,281 (Ebhardt); and 2,753,615 (Claude et al).

Fluorescent lamps having filament type hot cathodes have a life which is typically limited to about 10,000 to 20,000 hours, depending on lamp wattage, due to the fact that only a limited quantity of the emissive material can be coated on the filaments and due to evaporation and scattering of the emitter material off of the filament due to ionic bombardment from the discharge. Instant-start cold-cathode lamps, by contrast, have approximately half the life of a hot-cathode lamp of corresponding wattage because the ionic bombardment of the glow-to-arc discharge transition upon starting of these lamps causes significantly more sputtering of the emitter material from the electrode.

A problem with filament type electrodes, whether for hot or cold cathode use, is that it is difficult to provide an adequate control of the amount of emissive material provided on the coiled tungsten wire. The filament electrodes are dipped in a liquid mixture including, for example, barium carbonate, strontium carbonate, and calcium carbonate along with butyl acetate, nitrocellulose, butanol and zirconium oxide. After sealing in the lamps, the dipped filaments are treated according to a treatment schedule which includes passing various levels of electric current through the filaments to heat the filaments and convert the carbonates to oxides. During this treatment, the lamps are also evacuated to remove any volatiles driven off from the emitter material. The accumulation of small variations in the length and weight of the filaments, in the liquid mixture and the amount coated on the filament, and in the treatment schedule on the assembly line contribute to undesirable variations in the actual quantity of emissive material provided on the electrode in the finished lamp. Since lamp life is very sensitive to the quantity of emissive material provided, it is very difficult to control the life distribution of the lamps so as to manufacture lamps having a very narrow life distribution.

Various fused pellet composite discharge electrodes have been proposed for both hot and cold cathode operation for fluorescent lamps. U.S. Patent 3,766,423 (Menelly) shows a hot cathode electrode formed with a thermochemical sintering method by mixing tungsten with oxides of barium or with mixtures of oxides of barium, calcium and strontium. The mixture is pressed about metal leads and then heated until an exothermic reaction occurs. No yttrium oxide is present. The electrode produced has a density gradient containing 80% voids in the surface of the electrode extending down to 10% voids in the central portion of the electrode. It has been found, however, that such electrodes are very fragile and are difficult to degas because of the high porosity. U.S. Patent 3,758,809 (Menelly) discloses a similarly formed composite "cold-cathode" electrode which includes an integral metal lead extending from the bottom surface thereof. The pellet has a bulk density gradient structure wherein the interior portions and exterior bottom and side portions have a higher bulk density relative to the top portion of the pellet. Furthermore, the top portion of the pellet has a rough surface as compared to the smooth surface of the exterior bottom and side surfaces.

Butter et al, U.S. Patent 3,718,831 discloses yet another thermochemically sintered composite electrode having a bulk density gradient structure with an integral lead. Butter discloses that the cold cathodes of Menelly '809 were unsatisfactory because their ignition voltage was found to increase rapidly after a short burning time such that they could not be ignited on standard commercial ballasts. This was believed to be due to excessive sputtering and migration of the emitter material from the surface into the interior regions of the electrode. The electrode according to Butter has a cavity of conic section which reduces the amount of emitter material dislodged from the surface of the electrode and creates an electric field which causes migration of the emitter material to the outside surface of the electrode, where the discharge terminates on this electrode. A disadvantage, however, of the Butter electrode is its complicated shape.

Iwaya et al, U.S. Patent 4,808,883 shows a discharge lamp containing a "cold-cathode" electrode formed of a semiconductor ceramic material. The electrode in this lamp contains tungsten only in an amount up to 0.8 mol % and does not contain rare earth emitter materials. Other cathode configurations using semiconductor ceramics without rare earth emitter materials are known from JP 1-63253, JP 1-63254 and JP 1-77857.

Composite electrodes are also known for high pressure discharge lamps. U.S. Patent 4,303,848 (Shimizu et al) discloses a sintered electrode formed from a mixture of a high melting point metal, an emissive material of an alkaline earth metal or compound thereof, and at least one oxide of a metal selected from the group consisting of yttrium, zirconium, and aluminum. An electrode supporting rod is integrally sintered in the electrode. The electrode is formed by first mixing a base metal powder with an organic binder to form agglomerates, which are then granulated. An electron emissive powder is similarly prepared, mixed with the granulated base metal powder, and the mixture compacted at a pressure of 3 ton/cm$^2$. Before sintering at 1400-1600$^\circ$C, the compacted mixture is heated at a lower temperature for an extended period to drive off the organic binder. Because of the use of an organic binder which is later driven off, the disclosed compaction pressures and sintering temperatures, and the particle sizes of 60-180 $\mu$m the Shimizu electrode would have a porosity significantly greater than 10%.

A disadvantage of many known composite electrodes discussed above is that each have conductive leads integrally molded therein. This requires the pressing and sintering of each electrode in a separate mold and increases lamp cost.

It is an object of this invention to provide an improved method of securing a composite discharge electrode in a discharge lamp, and particularly, in a low pressure mercury vapor fluorescent lamp.

It is another object of this invention to provide an improved low pressure fluorescent discharge lamp having an improved "hot cathode" sintered electrode construction.

It is yet another object of this invention to provide an improved instant-start fluorescent low pressure discharge lamp having an improved sintered "cold cathode" electrode construction.

In the method according to the invention, a composite discharge electrode is held against a metallic conductor. A beam of laser light is directed onto a region of the conductor immediately adjacent the composite electrode to form a pool of molten metal which wets the electrode. The beam of laser light is then removed such that the pool of molten metal solidifies and coalesces with the conductor and the composite electrode. The resultant weld provides a reliable electrical, as well as a physical connection.

The method permits of the use of prefabricated composite discharge electrodes without integral leads along with current conductors in the form of lead-through wires of the type conventionally used in low pressure mercury vapor fluorescent lamps. As more fully explained below, the absence of integral leads facilitates the manufacture of the electrodes while the use of conventional wire lead-throughs permits of the use of these electrodes in discharge lamps with minimal changes to the lamp manufacturing process and mount construction.

It has been found that low pressure discharge lamps, particularly fluorescent low pressure discharge lamps, of highly improved characteristics may be manufactured by employing as the electrode, a sintered shaped mixture of inorganic material including an electron emissive metal oxide, at least 50% by weight of a refractory metal, and having a uniform density throughout with a porosity of less than 10%, the electrode being connected to a respective current conductor of the lamp by the above method.

The low porosity and uniform density yield an electrode which does not need to be degassed during lamp fabrication, substantially does not outgas during lamp operation, has favorable ignition characteristics for starting on commercial lamp ballasts, and is conducive to being laser welded to a metallic current conductor. The electrode is suitable for both "hot cathode" and "cold cathode" operation.

These and other objects of the method and lamps according to the invention will be apparent from the drawings and detailed description that follows.

## BRIEF DESCRIPTION OF THE DRAWINGS

Figure 1 is a cross-sectional view of a fluorescent low pressure discharge lamp of the invention employing transversely mounted discharge electrodes;
Figure 2 is an enlarged view of the mount of Figure 1 showing the location of the laser welds;
Figure 3 shows a mount construction for an instant-start fluorescent low pressure discharge lamp of the invention employing axially mounted "cold-cathode" sintered discharge electrodes; and
Figure 4 is a perspective view of the weld connection of the mount in Figure 3 illustrating the visual appearance of the welds.

## DESCRIPTION OF THE PREFERRED EMBODIMENTS

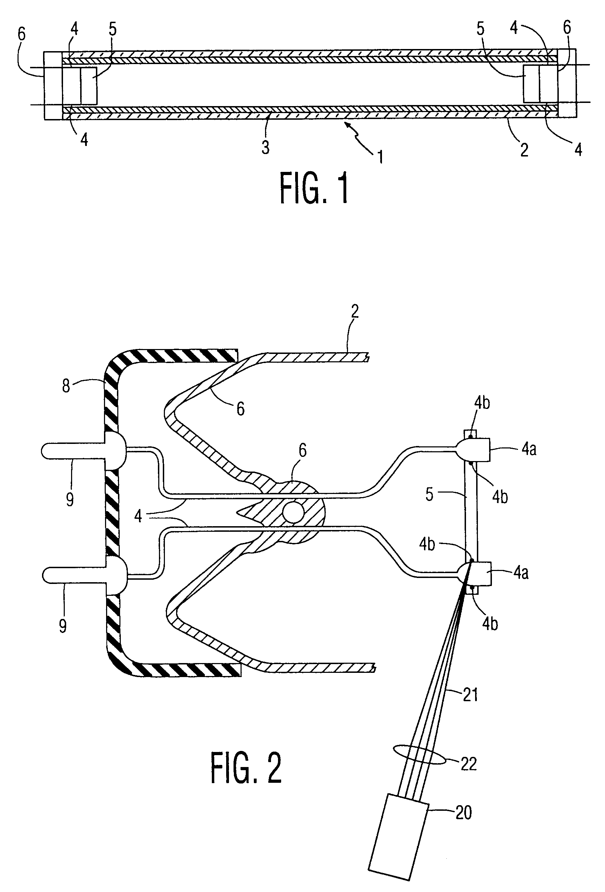

The fluorescent low pressure mercury discharge lamp of Figure 1 has a tubular shaped glass envelope 2 the inside surface of which has a light emitting phosphor layer 3. Sintered discharge electrodes 5 of the composition described above are transversely mounted within the envelope and are connected to respective current conductors in the form of lead-through wires 4 which extend through the sealed end portions 6 in a gas tight manner. The sealed end portion may consist of a conventional lamp stem. The lamp has a conventional discharge sustaining filling of a rare gas at a pressure of 1 to 10 torr and a small amount of mercury. During lamp operation a gas discharge is maintained between the electrodes 5.

Favorably, the electrode consists of about 50% to 90% by weight of tungsten, 5 to 25% by weight of barium oxide or approximately a 1:1:1 by weight mixture of barium oxide, calcium oxide and strontium oxide and 5-25% by weight of electron emissive metal oxides selected from the group consisting of the oxides of yttrium, zirconium, hafnium and of the rare earths.

While any metal oxide of the group consisting of the oxides of yttrium, zirconium, neodymium and hafnium may be employed, it is found that best results are achieved when the metal oxide is $Y_2O_3$. Tungsten is favorable because of its ease of processing and widespread use as an electrode material, although other refractory metals such as molybdenum and tantala may be used.

Preferably, the sintered electrodes are made from a mixture of 50 to 90% by weight of tungsten, 15 to 25% by weight of yttrium oxide and 15 to 25% of barium oxide, the particle sizes of these ingredients being 0.05 - 10 um.

The electrodes are manufactured by pressing and sintering mixtures of powders of tungsten and the oxides, or the tungsten powder is first coated with the oxides by a sol gel technique. This ensures that the sintered electrodes are extremely homogenous. The coated powders are then pressed and sintered. Pressing is generally carried out by isostatic pressing at a pressure of about 8,000 - 38,000 psi. Sintering is carried out in a reducing atmosphere, preferably in an atmosphere containing up to about 5% of hydrogen in an inert gas such as helium at a temperature of about 1600°C - 2200°C from 5 minutes to 1 hour.

While the electrodes may have any desired shape they are conveniently rod-shaped with a length of at least 1 mm with a length of up to about 20 mm and preferably up to about 10 or 15 mm. Preferably the thickness of the rod is 0.2 - 2 mm. Providing a tapered tip at the end of the rod, on which the discharge terminates in an axially mounted electrode, will improve lamp starting.

While the electrodes may be directly pressed and sintered into bars, the electrodes may be first formed as sintered wafers, which wafers are then cut into bars of desired size. By forming large wafers, for example 30 cms in diameter, many electrodes can be cut therefrom, which reduces lamp cost. The electrodes will be extremely uniform with each other because they are cut from the same wafer.

The above described method of manufacture of the electrodes according to the invention is significantly different than that used for the Menelly '423 and '809 and the Butter '831 electrodes and results in an electrode with significantly different characteristics. For example, Menelly compresses the mixture at about 1,000 to 4,000 psi in mold and heats the mixture to only 700 to 1000 degrees to obtain an exothermic reaction. This results in an extremely non-uniform electrode having particle sizes which vary from tenths of microns up to 50 microns and porosities which vary from 10% voids to 80% voids. The Butter electrodes are produced in a similar manner and have a gradient structure with similar porosity. As previously discussed, the Shimizu HID electrode also has a porosity much greater than 10%.

By use of the sintered electrodes according to the invention, it is expected that it will be possible to more closely control the life expectancy of the lamp, while reducing its cost, as compared to lamps having conventional filament electrodes in which the emitter material is applied by dipping and as compared to the exothermically formed sintered electrodes. The variations among the exothermically formed electrodes as described in the prior art, and the spread of lamp life of lamps employing these electrodes, would be expected to be large. Each electrode is manufactured in a separate mold to obtain the desired gradient across the electrode and to integrally mold the conductive lead(s) therein. The variations in the fill level and compression pressure in the mold for each electrode, the mold shapes, the temperature variations among the molds, and the inherent variations in the homogeneity of the mixture all will effect the exothermic reaction. Additionally, the need for an individual mold for each electrode significantly increase electrode, and hence, lamp cost.

The sintered electrodes according to the invention are formed by closely controlled chemistry without an exothermic reaction which provides significantly less variation in the amount of emitter material present in the electrode. The emitter mixture from which the electrodes are pressed and sintered includes only oxides. By contrast the mixtures in the prior art included carbonates which are later converted to oxides by heating.

Furthermore, the sintered electrodes according to the invention do not require any kind of treatment schedule in the lamp. Because of the ease of fabrication and the lack of a treatment schedule, it is expected that lamps having such electrodes will be cheaper to manufacture than lamps employing a conventional dipped filament electrode, as well as having a narrower life distribution.

Method of Installation

According to the invention, composite electrodes are secured to the lead-through wires by laser welding. Bending of the lead-through wires around the end of the electrodes to clamp the electrode was found to be unsatisfactory with respect to both the electrical and mechanical connection. Conventional contact welding between two welding contacts was also found to be unsatisfactory. The welding current passing through the end of the sintered electrode was found to heat it sufficiently such that its grain structure was modified. Additionally, with conventional contact welders used to weld filament electrodes to lead wires it was found that it was difficult to control the contact pressure of the welding contacts on the sintered electrode, which resulted in poor welds as well as breakage of the sintered electrodes.

As shown in Figure 2, a flat side of each end 5a of the electrode is arranged against a flattened end portion 4a of the respective lead-through wire 4. A beam of laser light 21 is directed from laser 20 through a lens 22 onto a lateral edge portion 4b of each flattened lead-through wire portion 4a immediately adjacent the sintered electrode to form a pool of molten metal which wets the adjacent face of the sintered electrode. The beam of laser light is then removed such that the pool of molten metal solidifies and coalesces with the lead-through wire and the face of the sintered electrode. Preferably, the electrode is welded along both lateral edge portions 4b of each lead-through.

Figure 2 shows the conventional connection of the lead-throughs 4 to the electrical connection pins 9 on the base 8 and the connection of the lamp stem 6 to the lamp envelope 1. However, in practice the electrode welding is favorably accomplished after sealing the lead wires in the lamp stem in a conventional manner, but before sealing of the completed stem to the lamp vessel.

Good welds were obtained using a Nd:YAG pulsed laser using pulse widths of 10 to 20 msec and energies of 3 to 5 Joules. The diameter of the laser light directed onto the flattened lead was about 200-600 microns. While optimally the laser beam is directed at the lead-through at a location closely proximate the lateral edge of the electrode, it has also been found that the beam may impinge on a portion of the electrode without degrading the quality of the weld or damaging the electrode due to the extremely localized heating of the electrode by the laser beam.

The lead-through wires consisted of nickel-plated steel. Other suitable materials include nickel-plated brass, nickel-plated cupro-nickel, tin-plated brass, or tin-plated cupro-nickel.

Extra metallic material, for example a thin wire or foil, may first be welded to the lead wire, followed by laser welding of the lead-through and this extra material to the electrode. The extra metal increases the pool of molten metal to improve wetting of the electrode. A thin 9 mil molybdenum wire, about 2-3 mm in length, welded to the flattened end portion by laser welding was found to be satisfactory for this purpose.

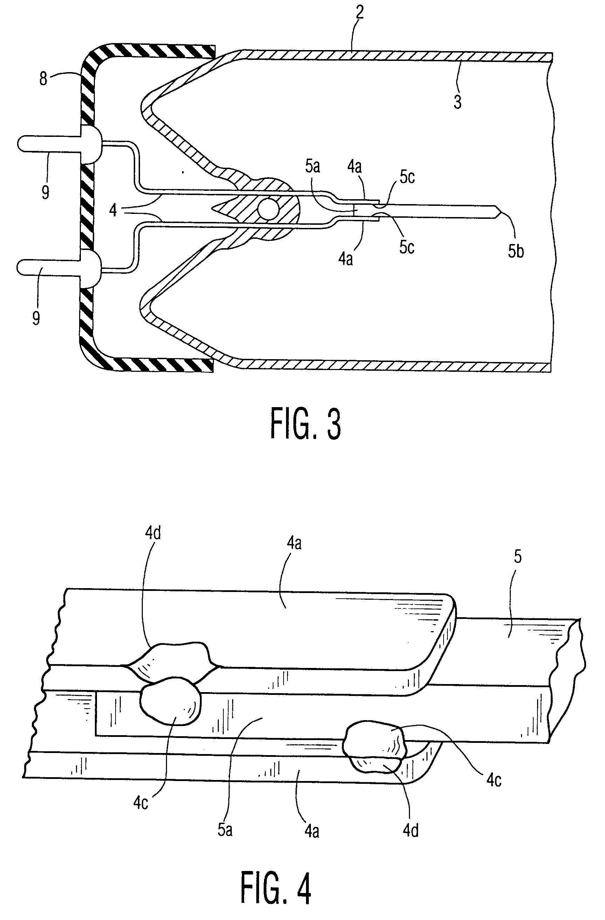

Figure 3 shows a mount construction for an axially extending "cold cathode" electrode for an instant start lamp. The flattened ends 4a of the lead-throughs 4 are arranged adjacent each other, and the basal end 5a, opposite tip 5b, of the electrode 15 is welded therebetween at each of the flattened ends, preferably along both lateral side edges 5c of the electrode, for a total of four (4) welds.

Figure 4 illustrates an exemplary appearance of the welds in the mount construction of Figure 3. The welds have the appearance of a ball of metal 4c which has sides coalesced with both the flattened lead-through wire portion 4a and the side of the electrode. The lead-through wire typically has pits, or cavities,

5

4d indicative of metal having been melted and displaced therefrom.

It will be readily apparent that other configurations may be used for an axially mounted electrode. For example, the base may include one central contact pin and the electrode mount may include one lead-through at each end instead of the two shown in Figure 3.

It should be noted that laser welding is generally known, for example from EP 0262699, for securing metal parts. However, its use with composite electrodes which are only partially metallic and consist of emissive oxides, has not been evident in the art. Rather, the prior art has avoided welding of composite electrodes by any method as evidenced by the extensive use of lead wires integrally sintered in the electrode.

Example

80 weight percent of tungsten of a particle size of 0.4 microns was coated with 10 percent by weight of yttrium oxide and 10 percent by weight of barium oxide.

The tungsten powder was coated with the yttrium oxide and the barium oxide employing a sol-gel technique. In carrying out this technique the tungsten powder was dispersed in a mixture of yttrium isopropoxide and barium butoxide in organic solvents in concentrations so as to provide 10 percent by weight of yttrium oxide and 10 percent by weight of barium oxide. The mixture was then formed into a dispersion and the resultant dispersion was heated at a temperature of about 90°C to remove the solvents. The resultant coated powder was then fired at a temperature of about 620°C for two hours in a nitrogen atmosphere containing about 2% of hydrogen.

The powder was then formed into pellets (1.4mm thick and 25mm in diameter) by pressing at a pressure of about 19000 psi. The pellets were then sintered at 2000°C for about 1 hour in an atmosphere of 95% helium and 5% hydrogen. The resultant pellets were then cut into bars of dimensions of 0.9 x 1.0 x 18 mm.

The resultant bars had porosities of less than 10% and a resistance of 2-4 ohms.

The bars were mounted transversely in a lamp envelope to form a low pressure mercury vapor fluorescent "hot cathode" discharge lamp as in Figure 1. The following tests were carried out with this lamp. Employing a DC power supply (600 V, 1A) and employing a resistor as a ballast the lamp voltage and current were monitored for different heating currents while the lamp was in an arc mode and carrying the cathode current.

The time between the measurements was about two minutes and the ambient temperature was about 22°C. The results are shown in the following table.

Table 1

| Lamp Voltage as Function of Lamp Current at Various Cathode Heating Currents | | | | | |
|---|---|---|---|---|---|
| Cathode Current (A) | 2.2 | 2.2 | 1.8 | 1.6 | 1.5 |
| Lamp Current (mA) | | | | | |
| 200 | 123 | | | | |
| 250 | 118 | | | | |
| 300 | 114 | 115.5 | | | |
| 350 | 110 | 111 | 115 | | |
| 400 | 107 | 108 | 110 | 115 | 112 |
| 425 | 106 | 106.5 | 109 | 113.5 | 111 |
| 450 | 105 | 105 | 107 | 112 | 109 |
| 475 | 104 | 104 | 106 | 109 | 108 |
| 495 | 103 | 103 | 106 | 109 | 107 |

The values shown clearly indicate that the discharge provided by this lamp was stable at a wide range of cathode current and lamp currents.

The relationship between cathode current and cathode voltage is shown in the following table.

TABLE 2

| 10% Ba0 Cathode I-V Characteristics | |
|---|---|
| Cathode Current A | Cathode Voltage V |
| .1 | .05 |
| .2 | .08 |
| .3 | .14 |
| .4 | .19 |
| 1.0 | .63 |
| 1.5 | 1.58 |
| 1.8 | 2.08 |
| 2.0 | 2.42 |
| 2.2 | 2.79 |
| 2.4 | 3.11 |
| 2.6 | 3.37 |
| 2.8 | 3.68 |

This table shows that the cold resistance of the cathode was about 0.5 ohms and that the resistance of the cathode was about 1.31 ohms at 2.8 A.

The lamp was again started and the lamp current $I_{LA}$ was about 400mA and the cathode current was decreased from 2.2 to OA. The discharge was stable. The lamp current was reduced from 400mA to 150mA. At the latter current the discharge became unstable. The results are shown in the following table.

Table 3

| Lamp Voltage and Current at Various Cathode Currents | | |
|---|---|---|
| Cathode Current A | Lamp Current mA | Lamp Voltage V |
| 2.2 | 400 | 109 |
| 0.6 | 400 | 114 |
| 0.4 | 400 | 114 |
| 0 | 400 | 116 |
| 0 | 350 | 120 |
| 0 | 300 | 126 |
| 0 | 250 | 132 |
| 0 | 200 | 144 |
| 0 | 150 | 170 |

The discharge was stable until the lamp current was reduced to 150mA. Thus the discharge provided in the lamp was stable between a wide range of lamp currents.

Four foot T12 fluorescent "instant start" lamps with the prefabricated bar electrodes arranged axially in a "cold cathode" manner, as in Figure 3, were subjected to the following test to determine their operability. The electrodes were the same as above but were cut into bars of dimensions 0.3 x 0.3 x 18 mm. The lamps were connected to a commercial single lamp instant start ballast (Advance SM140-TP). Power was supplied to the ballast by a variac connected to the main supply voltage. With the variac set at 120V output to the ballast, the lamp ignited in an arc discharge. The initial arc was to the leads close to the glass seals. The tip

8

of the electrodes had a faint reddish glow initially and this increased in intensity, the electrodes got hotter and then the arc jumped to the tips of both electrodes and gave an arc. The initial arc was sufficient to heat the bar electrodes to temperatures necessary for thermionic emission and the arc jumped to the electrode tips. The glow to arc transition time was comparable to that of a regular instant start lamp with conventional electrodes.

**Claims**

1. A method of securing a composite discharge electrode to a metallic current-conductor of an electric discharge lamp, said method comprising:
   a) providing a composite electrode;
   b) providing a metallic current-conductor;
   c) holding said composite electrode in contact with said current-conductor; and
   d) laser welding said composite electrode to said current-conductor by
      1) directing a beam of laser light onto a region of said current-conductor immediately adjacent said composite electrode such that the surface of said current-conductor melts and forms a pool of molten metal which wets said composite electrode, and
      2) removing said beam of laser light such that said pool of molten metal solidifies and coalesces with said current-conductor and said composite electrode, forming a welded joint therebetween.

2. A method according to Claim 1, wherein said current-conductor, in the region where said composite electrode is welded thereto comprises a metallic coating disposed over a metallic core, said coating having a lower melting point than said core.

3. A method according to Claim 1 or 2, wherein said current-conductor and said composite electrode are provided with complimentary surfaces at the region where they contact each other.

4. A method according to Claim 3, wherein said current-conductor consists of a length of lead-through wire flattened at an end portion thereof, and said electrode includes a complimentary flattened portion.

5. A method according to one or more of the previous claims, wherein said laser light is directed at said current-conductor with an energy of 3 to 5 Joules and pulse widths of 10 to 20 msec.

6. A method according to one or more of the previous claims, wherein prior to laser welding said composite electrode to said current-conductor an additional metallic element is fixed on said lead-through wire for melting by said laser to increase the size of the pool of molten metal.

7. A low pressure discharge lamp having a tubular lamp envelope defining a discharge path between sealed end portions of said lamp envelope, a discharge sustaining filling within said lamp envelope, a pair of discharge electrodes arranged adjacent said end portions between which a discharge is sustained during lamp operation, and a current-conductor extending through each sealed end portion and connected to a respective discharge electrode, characterized in that said discharge electrodes are composite discharge electrodes and are connected to their respective current-conductors by laser welding, said current-conductor having a metallic portion coalesced with said sintered electrode forming a welded joint therebetween.

8. A low pressure discharge lamp according to Claim 7, wherein said composite electrode is comprised of at least 50% by weight of a refractory metal and is a fully dense sintered homogeneous body having a porosity of less than 10% throughout.

9. A low pressure discharge lamp according to Claim 7 or 8, wherein said sintered electrode consists of 50% to 90% by weight of tungsten, 5% to 25% by weight of barium oxide or approximately a 1:1:1 by weight mixture of barium oxide, calcium oxide, and strontium oxide and 5-25% by weight of a metal oxide selected from the group consisting of the oxide of yttrium, zirconium, hafnium and of the rare earth.

10. A low pressure discharge lamp according to Claim 7, 8 or 9, further comprising a fluorescent coating on the inside of said lamp envelope, and a filling of mercury and a rare gas at a pressure of 1-10 torr, and

wherein each sealed end portion comprises a lamp stem, said current-conductors are comprised of a pair of lead-through wires extending through said stem, and said sintered discharge electrodes are arranged substantially transversely in said envelope and are laser welded to a respective said pair of lead-throughs at opposite ends of said electrodes.

11. A low pressure discharge lamp according to Claim 7, 8 or 9, further comprising a fluorescent coating on the inside of said lamp envelope, and a filling of mercury and a rare gas at a pressure of 1-10 torr, and

wherein each sealed end portion comprises a lamp stem, said current-conductors are comprised of a pair of lead-through wires extending through said stem, and said sintered discharge electrodes are arranged substantially axially in said envelope and are laser welded between a respective said pair of lead-through wires at a basal end thereof.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X<br>Y<br>A | DE-A-33 29 270 (HEINMANN GMBH)<br><br>* abstract; claim 10; figures *<br>* page 5, line 34 - line 36 *<br>* page 9, line 9 - line 10 *<br>* page 10, line 15 - line 18 *<br>--- | 1,3,4<br>1,2<br>11 | H01J9/02<br>B23K26/00<br>H01J61/067<br>H01J61/70 |
| X<br><br>Y<br>A | EP-A-0 489 463 (N.V. PHILIPS' GLOEILAMPENFABRIEKEN)<br><br>* abstract; claims; figure *<br>* page 2, line 49 - page 3, line 7 *<br>* page 3, line 13 - line 20 *<br>* page 4, line 58 *<br>--- | 7-10<br><br>11<br>1 | |
| Y | EP-A-0 017 384 (ELLIOTT BROTHERS (LONDON) LIMITED)<br>* abstract; figures *<br>--- | 1,2 | |
| Y | PATENT ABSTRACTS OF JAPAN<br>vol. 15, no. 223 (E-1075)7 June 1991<br>& JP-A-03 064 845 (TOSHIBA LIGHTING & TECHNOLOGY CORPORATION) 20 March 1991<br>* abstract *<br>--- | 7-11 | TECHNICAL FIELDS SEARCHED (Int.Cl.5)<br><br>H01J<br>B23K<br>H01K |
| Y,D | US-A-3 758 809 (MENELLY ET AL.)<br>* abstract *<br>* column 3, paragraph 2 *<br>* column 4, line 21 - line 25 *<br>--- | 7-11 | |
| Y<br><br><br><br>A | PATENT ABSTRACTS OF JAPAN<br>vol. 14, no. 550 (E-1009)6 December 1990<br>& JP-A-02 236 941 (HITACHI LTD) 19 September 1990<br>* abstract *<br>--- | 7-11<br><br><br><br>6 | |

-/--

The present search report has been drawn up for all claims

| Place of search | Date of completion of the search | Examiner |
|---|---|---|
| THE HAGUE | 24 November 1993 | Martín Vicente, M |

EPO FORM 1503 03.82 (P04C01)

European Patent
Office

**EUROPEAN SEARCH REPORT**

Application Number

EP 93 20 2336

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | DD-A-268 393 (ZENT INST SCHWEISSTECHNI)<br>* abstract *<br>* last paragraph; claim 3 *<br>--- | 5 | |
| A | US-A-4 249 060 (COLBY)<br>* column 1, line 28 - line 35 *<br>--- | 5 | |
| A | WO-A-92 00829 (SOLLAC)<br>* abstract *<br>* page 1, line 13 *<br>----- | 6 | |
| | | | TECHNICAL FIELDS<br>SEARCHED      (Int.Cl.5) |

The present search report has been drawn up for all claims

| Place of search | Date of completion of the search | Examiner |
|---|---|---|
| THE HAGUE | 24 November 1993 | Martín Vicente, M |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)